# EUROPEAN PATENT APPLICATION

(11) **EP 4 325 703 A1**
(43) Date of publication of application: **21.02.2024**
(21) Application number: 23172672.0
(22) Date of filing: 10.05.2023
(51) Int. Cl.: H02K 49/10

(54) **POWER TRANSMISSION STRUCTURE**

(30) Priority: 19.08.2022 TW 111209068 U
(71) Applicant: Tu, Ching-Jan, Pitou Township, Changhua County (TW)
(72) Inventor: Tu, Ching-Jan, Pitou Township, Changhua County (TW)
(74) Representative: Lang, Christian

(57) **Abstract**

A power transmission structure contains: a transmission disc driven by a power source. The transmission disc includes multiple first magnetic sets arranged on the transmission disc and having a same polarity facing outward. The transmission disc also includes an actuated shaft connected on a side of the transmission disc, and the actuated shaft includes a driven disc vertically fixed on the actuated shaft proximate to the transmission disc. The driven disc includes multiple second magnetic sets arranged on an outer periphery thereof and having a same polarity facing the transmission disc, and a polarity of a respective one first magnetic set of the transmission disc is identical to a polarity of a respective one second magnetic set of the driven disc.

## Description

### FIELD OF THE INVENTION

The present invention relates to a power transmission structure which is capable of avoiding tolerance and abrasion between conventional gears, chains or belts by using non-contacting drive manner.

### BACKGROUND OF THE INVENTION

A conventional power transmission mechanism is driven by a power source, such as a motor, to output a power. Then, a drive shaft and a driven shaft are actuated to drive gears, toothed discs or pulleys to engage with chains and belts, thus obtaining transmission.

However, the conventional transmission structure operates by contacting related components to cause tolerance and abrasion, thus damaging all related components, such as the gears, the toothed discs, the pulleys, the chains and the belts.

The present invention has arisen to mitigate and/or obviate the afore-described disadvantages.

### SUMMARY OF THE INVENTION

The primary object of the present invention is to provide a power transmission structure which is capable of avoiding the tolerances and the abrasions between the transmission disc and the driven disc and between the intermediate disc and the transmitted disc to prolong a service life of the power transmission structure.

Another object of the present invention is to provide a power transmission structure by which the motor drives the transmission disc to rotate at a high speed, and the respective one first magnetic set of the transmission disc repels the respective one second magnetic set of the driven disc so that the respective one second magnetic set is pushed by the respective one first magnetic set to rotate the driven disc and to drive the actuated shaft to rotate, hence the transmission disc does not contact with the driven disc to avoid tolerance and abrasion between the transmission disc and the driven disc.

### BRIEF DESCRIPTION OF THE DRAWINGS

FIG. 1 is a perspective view showing the assembly and the operation of a power transmission structure according to a preferred embodiment of the present invention.
FIG. 2 is a perspective view showing the assembly and the operation of a power transmission structure according to a preferred embodiment of the present invention.

### DETAILED DESCRIPTION OF THE PREFERRED EMBODIMENTS

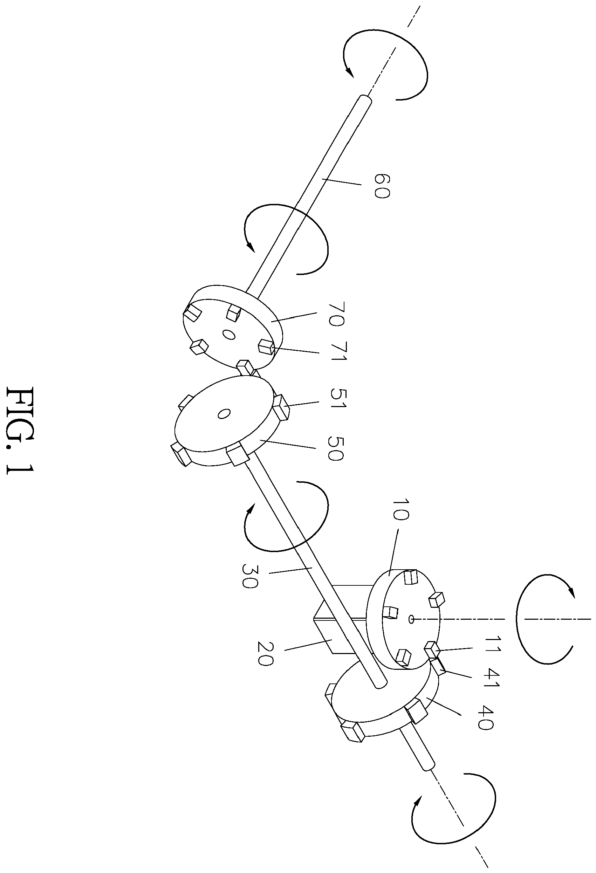

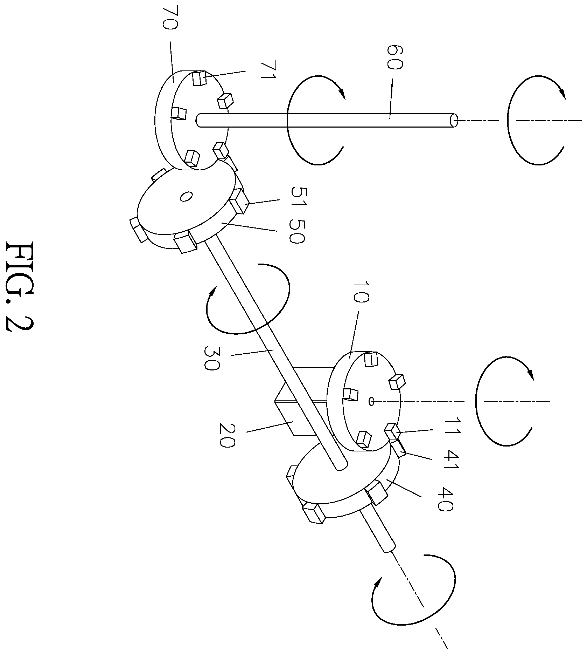

With reference to FIGS. 1 and 2, a power transmission structure according to a preferred embodiment of the present invention comprises: a transmission disc 10 driven by a power source which is a motor 20 or other driving apparatuses, and the transmission disc 10 includes multiple first magnetic sets 11 arranged on the transmission disc 10 and having a same polarity facing outward, the transmission disc 10 also includes an actuated shaft 30 connected on a side thereof, and the actuated shaft 30 includes a driven disc 40 vertically fixed thereon proximate to the transmission disc 10, wherein the driven disc 40 includes multiple second magnetic sets 41 arranged on an outer periphery thereof and having a same polarity facing the transmission disc 10, and a polarity of a respective one first magnetic set 11 of the transmission disc 10 is identical to a polarity of a respective one second magnetic set 41 of the driven disc 40.

In operation, the motor 20 drives the transmission disc 10 to rotate at a high speed, and the respective one first magnetic set 11 of the transmission disc 10 repels the respective one second magnetic set 41 of the driven disc 40 so that the respective one second magnetic set 41 is pushed by the respective one first magnetic set 11 to rotate the driven disc 40 and to drive the actuated shaft 30 to rotate, hence the transmission disc 10 does not contact with the driven disc 40 to avoid tolerance and abrasion between the transmission disc 10 and the driven disc 40.

In another embodiment, the actuated shaft 30 includes an intermediate disc 50 disposed on an end thereof, the intermediate disc 50 includes a driven post 60 connected on a side thereof, and the driven post 60 includes a transmitted disc 70 connected on an end thereof adjacent to and not contacting with the intermediate disc 50, wherein the intermediate disc 50 includes multiple first magnetic elements 51 arranged on an outer periphery thereof, and the transmitted disc 70 includes multiple second magnetic elements 71 arranged on an outer periphery thereof, wherein a polarity of a respective one first magnetic element 51 of the intermediate disc 50 is identical to a polarity of a respective one second magnetic element 71 of the transmitted disc 70, such that the transmission disc 10 is driven by the motor 20 to actuate the actuated shaft 30 to revolve, and the actuated shaft 30 actuates the driven disc 40 to rotate, then the intermediate disc 50 is actuated to rotate by the driven disc 40, wherein the respective one first magnetic element 51 repels the respective one second magnetic element 71 to urge the transmitted disc 70 and the driven post 60 to revolve, thus avoiding tolerance and abrasion between the intermediate disc 50 and the transmitted disc 70.

Thereby, the power transmission structure is capable of avoiding the tolerances and the abrasions between the transmission disc 10 and the driven disc 40 and between the intermediate disc 50 and the transmitted disc 70 to prolong a service life of the power transmission structure.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A power transmission structure comprising:
a transmission disc driven by a power source, and the transmission disc including multiple first magnetic sets arranged on the transmission disc and having a same polarity facing outward, the transmission disc also including an actuated shaft connected on a side of the transmission disc, and the actuated shaft including a driven disc vertically fixed on the actuated shaft proximate to the transmission disc, wherein the driven disc includes multiple second magnetic sets arranged on an outer periphery thereof and having a same polarity facing the transmission disc, and a polarity of a respective one first magnetic set of the transmission disc is identical to a polarity of a respective one second magnetic set of the driven disc;
wherein after the transmission disc is driven by the power source to rotate, and the respective one first magnetic set of the transmission disc repels the respective one second magnetic set of the driven disc so that the respective one second magnetic set is pushed by the respective one first magnetic set to rotate the driven disc and to drive the actuated shaft to rotate, hence the transmission disc does not contact with the driven disc.

2. The power transmission structure as claimed in claim 1, wherein the transmission disc is driven by a motor or other driving apparatuses.
